# EUROPÄISCHE PATENTANMELDUNG

(11) **EP 0 562 268 A1**
(43) Veröffentlichungstag der Anmeldung: **29.09.1993**
(21) Anmeldenummer: 93102512.6
(22) Anmeldetag: 18.02.1993
(51) Int. Cl.: G01N 21/89

(54) **Vorrichtung zum Ermitteln von Strukturfehlern in textilen Flächengebilden**

(30) Priorität: 26.03.1992 DE 4209773
(71) Anmelder: Theodor Groz & Söhne & Ernst Beckert Nadelfabrik Commandit-Gesellschaft, D-72458 Albstadt (DE)
(72) Erfinder: Preusser, Thomas, W-6274 Hünstetten-Wallbach (DE)
(74) Vertreter: Rüger, Rudolf, Dr.-Ing.

(57) **Zusammenfassung**

Eine Vorrichtung (1) zum Prüfen von textilen Flächengebilden enthält eine Bleuchtungseinrichtung (3), die auf dem zu prüfenden textilen Flächengebilde (2) einen balkenförmigen Fleck ausleuchtet. Der balkenförmige Fleck liegt schräg zu der Richtung der Maschenstäbchen (22) im Falle von Gewirken und Gestricken bzw. schräg zu Kettfäden (18) im Falle von Geweben. Außerdem weist die Vorrichtung eine Bildaufnahmeeinrichtung (4) auf, die aus einem Objektiv (13) und einem CCD-Element (14) besteht, das einen Ausschnitt des balkenförmigen Leuchtflecks auf das CCD-Element (14) abbildet.

## Beschreibung

Die Erfindung betrifft eine Vorrichtung zum Prüfen von textilen Flächengebilden wie Maschenware und Geweben auf Fehler in der Struktur.

Beispielsweise beim Rundstricken mit Hilfe großer mehrsystemiger Rundstrickmaschinen entsteht die Notwendigkeit, möglichst schnell zu erkennen, ob einzelne Nadeln oder Strickschlösser fehlerhaft arbeiten, um diese Fehler so rasch wie möglich zu beheben, damit kein nennenswerter Ausschuß produziert wird. Solche Fehler können in Laufmaschen bestehen, wenn bei einer Nadel der Haken abgebrochen ist oder es können in der Maschenware Ringel auftreten, die ihre Ursache in einem abweichenden Fadenbedarf/-Zufuhr einer Strickstelle haben können.

Die erwähnten Fehler sind lediglich beispielhaft. Es können darüber hinaus noch eine Reihe weiterer Fehler auftreten, die sich ebenfalls in Strukturfehlern in Gestricks äußern.

Würde mit einer solchen ungleichförmig arbeitenden Strickmaschine weitergearbeitet werden, entstünde ein sehr hoher Ausschuß, da praktisch der gesamte erzeugte Ballen unbrauchbar ist.

Strukturfehler sind aber nicht nur auf Gestricke oder Gewirke beschränkt, sondern können auch beim Weben auftreten, wenn Teile der Webmaschine nicht fehlerfrei arbeiten.

Aus der Stricktechnik sind sogenannte Maschenwächter bekannt, die an der Rundstrickmaschine angebaut werden und kontinuierlich streifenweise das vorbeilaufende Gestrick auf punktförmige oder linienförmige Fehler, also Löcher oder Laufmaschen hin, überprüfen.

Aus der DE-PS 35 36 991 ist ein. Textilbahnüberwachungsgerät bekannt, bei dem der Abtastkopf nach dem Prinzip der Reflexionslichtschranke arbeitet und eine Fotodiode das Licht empfängt, das von einer Leuchtdiode ausgeht und an den Fäden des textilen Flächengebildes diffus gestreut wird. Eine Abbildung im optischen Sinne findet bei dieser Anordnung nicht statt.

Zum Erkennen von Strukturfehlern, wie Ringeln, infolge schwankender Maschengröße ist die Anordnung nicht geeignet.

Ausgehend hiervon ist es Aufgabe der Erfindung, eine Vorrichtung zum Prüfen von textilen Flächengebilden auf Strukturfehler zu schaffen, die sowohl Löcher und Laufmaschen sowie Dichteschwankungen erfassen kann.

Die Aufgabe wird erfindungsgemäß durch die Vorrichtung mit den Merkmalen des Anspruches 1 gelöst.

Die besondere Art der Anordnung der Beleuchtungseinrichtung führt zu einer deutlichen Kontrastverstärkung an den Rändern der einzelnen Fäden und somit der dort auftretenden Störungen. Infolge des streifenden Lichtes werden Flächenbereiche, die stärker in Richtung Lichtquelle geneigt sind, deutlich heller abgebildet, als Flächenteile an den Fäden, die von der Lichtquelle wegzeigen. Infolge dieser Kontrastverstärkung entsteht auch auf der Bildaufnahmeeinrichtung ein entsprechend kontrastreicheres Bild, d.h. im optischen Sinne gesprochen ein Bild mit größerer Steilheit, also schärferen Übergängen im Bereich der einzelnen Fadenkanten. Dadurch kann die Bildaufnahmeeinrichtung ohne weiteres noch Strukturunterschiede feststellen, die bei direktem Auflicht mangels Kontrast verlorengehen würden.

Außerdem ermöglicht die streifende Beleuchtung sowohl die Erkennung von Strukturfehlern in Gestalt von Ringeln als auch Laufmaschen, in denen einzelne Fäden flott liegen, weil die Beleuchtungsrichtung schräg liegt zur Flächennormalen des untersuchten Gebietes und auch schräg liegt zu den Maschenstäbchen bzw. Kettfäden.

Würde die Beleuchtung zwar schräg zur Flächennormalen, aber rechtwinklig zu den Maschenstäbchen liegen, könnte die Bildaufnahmeeinrichtung flott liegende Fäden mangels Kontrast nicht sehen.

Wenn mit der neuen Vorrichtung Rundstrickware überwacht wird, braucht die Vorrichtung nicht bewegt zu werden, da sich aufgrund des Strickvorganges ohnehin alle Teile des Warenschlauches einmal an der Vorrichtung vorbeibewegen. Dabei liegt die Hauptbewegungsrichtung des Warenschlauches etwa senkrecht zu den erzeugten Maschenstäbchen. Wenn dagegen die Ware wie beim Flachstricken oder Weben sich hauptsächlich in Richtung der Maschenstäbchen oder Kettfäden bewegt, kann die Vorrichtung an der Warenbahn vorbeibewegt werden, wobei dasselbe Beleuchtungs- und Abbildungsprinzip verwendet wird.

Ein möglichst großer Kontrast bei dem lichtempfindlichen Element wird erreicht, wenn die Optik ein scharfes reelles Bild des zu untersuchenden Flächenbereiches auf dem lichtempfindlichen Element erzeugt. Die Zerstreuungskreise der Bildpunkte laufen dann nicht kontrastmindernd ineinander.

Die optische Achse der abbildenden Optik liegt günstigerweise parallel zu der Flächennormalen, um perspektivische Verzerrungen zu vermeiden.

Um den Platzbedarf der neuen Vorrichtung klein zu halten, ist zweckmäßigerweise im Strahlengang des Objektivs, also entweder zwischen dem textilen Flächengebilde und dem Objektiv oder zwischen dem Objektiv und dem lichtempfindlichen Element ein Spiegel angeordnet. Die Lage des Spiegels bezüglich des Objektivs richtet sich nach der gewählten Brennweite und dem gewünschten Abbildungsmaßstab bzw. nach der Größe des lichtempfindlichen Elementes, bezogen auf die jeweils untersuchte Fläche.

Als lichtempfindliches Element kommt bevorzugt ein CCD-Element in Frage, weil hierdurch infolge der dicht gedrängten Anordnung der Bildpunkte ein sehr hohes Auflösungsvermögen erreicht wird.

Im Falle der Verwendung des CCD-Elementes, also eines linienförmigen, lichtempfindlichen Elementes, ist die Anordnung zweckmäßigerweise so getroffen, daß der auf dem CCD-Element abgebildete Bereich des textilen Flächengebildes ein längliches Rechteck, also praktisch eine Gerade ist, die schräg gegenüber den Maschenstäbchen bzw. Kettfäden verläuft.

Auch die Beleuchtungseinrichtung kann eine lineare Lichtquelle, beispielsweise in Gestalt mehrerer einzelner Lichtquellen sein, die längs einer Geraden angeordnet sind. In diesem Falle genügt eine Zylinderlinse, um den gewünschten beleuchteten Streifen auf dem textilen Flächengebilde zu erzeugen. Bei der kombinierten Verwendung des CCD-Elementes mit der linearen Beleuchtungseinrichtung sind das beleuchtete Feld und das abgebildete Feld zweckmäßigerweise deckungsgleich bzw. das beleuchtete Feld ist etwas größer als der abgebildete Bereich.

Aufgrund dieser Anordnung wird ein maximaler Kontrast erreicht, während andererseits die Gefahr von Fremdlicht, das wiederum kontrastmindernd wirken würde, deutlich vermindert ist.

Zweckmäßigerweise ist die Lichtquelle eine Lichtquelle für Infrarotlicht und im Strahlengang sind Filter enthalten, die sichtbares Licht unterdrücken, damit die Vorrichtung nicht von dem normalen Raumlicht gestört wird, das dazu führt, daß die wegen des Streiflichts an sich dunklen Bereiche vom Raumlicht kontrastmindernd aufgehellt werden.

In der Zeichnung ist stark schematisiert ein Ausführungsbeispiel des Gegenstandes der Erfindung dargestellt. Es zeigen:
- Fig. 1: die prinzipielle Anordnung der Beleuchtungseinrichtung und der Bildaufnahmeeinrichtung der neuen Vorrichtung,
- Fig. 2: eine schematisierte Darstellung der Beleuchtungseinrichtung nach Fig. 1 und
- Fig. 3: die Lage des beleuchteten bzw. abgebildeten Feldes auf einem textilen Flächengebilde in einer Draufsicht.

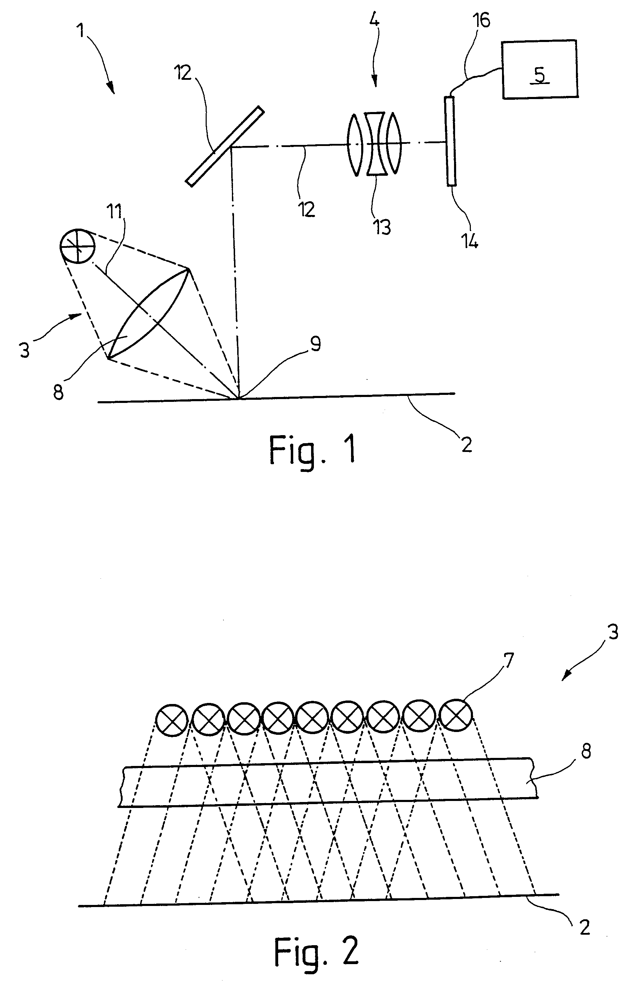

Fig. 1 zeigt eine Vorrichtung 1 zum Erkennen von Fehlern in einer textilen Warenbahn 2, beispielsweise einem Gestrick, einem Gewirk oder einem Gewebe. Die Vorrichtung 1 enthält eine Beleuchtungseinrichtung 3 sowie eine Bildaufnahmeeinrichtung 4, an die eine Auswerteelektronik 5 angeschlossen ist. Die Beleuchtungseinrichtung 3 weist, wie Fig. 2 erkennen läßt, eine Vielzahl längs einer Geraden angeordnete, einzelne Infrarotfotodioden 7 auf, die über eine nicht gezeigte Stromversorgungseinrichtung mit Strom versorgt werden. Vor der Zeile aus Leuchtdioden 7 ist eine Zylinderlinse 8 angeordnet, die dieselbe Länge hat wie die Zeile aus Leuchtdioden 7. Die Zylinderlinse 8 fokussiert das von den Leuchtdioden 7 ausgehende Licht zu einer Brennlinie auf der der Beleuchtungseinrichtung 3 zugekehrten Seite des Flächengebildes 2.

Da, wie sich aus der nachfolgenden Beschreibung ergibt, lediglich ein linienförmiges Feld zu beleuchten ist, spielt es keine Rolle, daß die Zylinderlinse 8 nicht exakt abbildet. Vielmehr hat diese Anordnung den Vorteil, daß die an sich sonst auftretenden Hell-/Dunkelbereiche infolge der diskreten Leuchtdioden wegen des starken Astigmatismusfehlers der Zylinderlinse 8 ineinander übergehen, so daß ein weitgehend gleichförmiger Leuchtbalken bei 9 entsteht.

Die wechselweise Überdeckung der Lichtkegel der einzelnen Leuchtdioden 7 in Richtung der Längserstreckung der Zylinderlinse 8 ist in Fig. 2 schematisiert angedeutet.

Die Leuchtdioden 7 sind auf der optischen Achse 11 der Zylinderlinse 8 angebracht und haben alle von deren Hauptebene denselben Abstand. Die optische Achse 11 ist gegenüber der Oberseite des textilen Flächengebildes 2 unter einem Winkel zwischen 20^{o} und 70^{o}, vorzugsweise 45^{o} geneigt. Das von der Zylinderlinse 8 kommende Licht fällt damit streifend auf die Oberfläche des textilen Flächengebildes 2. Infolge der streifenden Beleuchtung werden jene Flächenbereiche der Fäden des texilen Flächengebildes 2 heller zu sehen sein, bei denen die jeweilige Flächennormale stärker parallel zu der optischen Achse 11 ausgerichtet ist als jene Flächenbereiche, bei denen die Flächennormale der Faden- oder Filamentstücke stärker gegenüber der optischen Achse 11 geneigt ist. Es entsteht dadurch ein sehr kontrastreiches Bild des beleuchteten Flächenbereiches des textilen Flächengebildes 2.

Der von der Beleuchtungseinrichtung 3 beleuchtete balkenförmige Fleck 9 wird mit Hilfe eines Spiegels 12 und einer abbildenden Optik 13 auf ein CCD-Element 14 abgebildet; anstelle eines CCD-Elementes 14 kann auch jedes andere bildgebende Element eingesetzt werden. Das CCD-Element 14 ist ein handelsübliches CCD-Element, wie es für gewöhnlich in Videokameras u.dgl. Verwendung findet. Es befindet sich an der Stelle des reellen Bildes, das die abbildende Optik 3 von dem beleuchteten Fleck 9 erzeugt. Dabei ist die Anordnung so getroffen, daß die optische Achse 15 der abbildenden Optik 13 parallel zu der Flächennormalen des textilen Flächengebildes 2 ausgerichtet ist. Der im Strahlengang befindliche Spiegel 12 hat lediglich den Zweck, die Bauhöhe der Vorrichtung 1 über dem textilen Flächengebilde 2 zu verringern, indem die abbildende Optik 13 liegend und nicht stehend bezüglich des textilen Flächengebildes 2 angeordnet wird.

Die abbildende Optik 13 ist eine Linsenoptik aus sphärischen und/oder asphärischen Linsen und hat weitgehend keine Abbildungsfehler, um ein möglichst scharfes Bild des beleuchteten Flecks 9 zu erzeugen, damit nicht die Zerstreuungskreise der einzelnen Bildpunkte kontrastmindernd ineinander übergehen.

An das CCD-Element 14 ist über eine elektrische Verbindungsleitung 16 die bildverarbeitende Elektronik angeschlossen.

Da die Bildaufnahmeeinrichtung 4 und die Beleuchtungseinrichtung 3 auf derselben Seite des Objektes angebracht sind, handelt es sich um eine Beleuchtung im Auflichtverfahren.

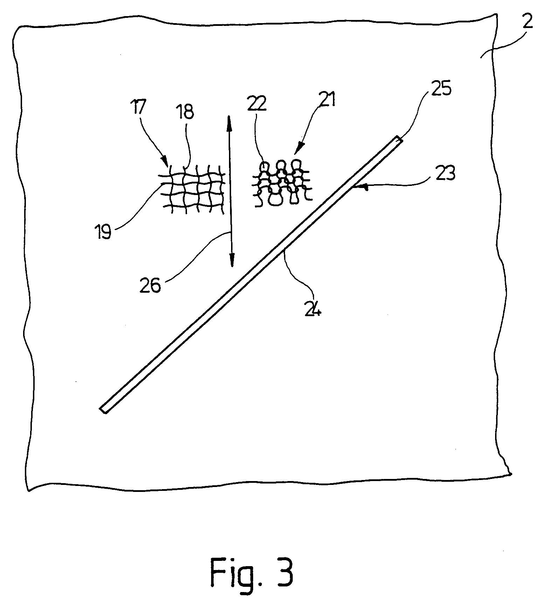

Fig. 3 zeigt schematisiert einen Ausschnitt des textilen Flächengebildes 2 nach Fig. 1 in einer Draufsicht, wobei im Falle eines Gewebes bei 17 schematisch der Verlauf von Kettfäden 18 und Schußfäden 19 veranschaulicht ist, während bei 21 ein Ausschnitt aus einem Gestrick oder Gewirk gezeigt ist unter Angabe des Verlaufs von dessen Maschenstäbchen 22. Die Lage des CCD-Elementes 14 ist so gewählt, daß eine in Fig. 3 gezeigte balkenförmige Fläche 23 auf dem CCD-Element 14 scharf abgebildet wird. Die balkenförmige Fläche 23 ist ein längliches, fast linienförmiges Rechteck mit einer langen Kante 24 und einer kurzen Kante 25. Dieses balkenförmige Rechteck 23 wird von dem CCD-Element 14 gesehen und ist so ausgerichtet, daß die lange Kante 24 schräg gegenüber der Richtung der Maschenstäbchen 22 bzw. der Kettfäden 18 verläuft, deren Richtung durch einen Doppelpfeil 26 veranschaulicht ist. Der Winkel, den die lange Kante 24 des balkenförmigen Rechtecks 23 mit der Richtung 26 einschließt, liegt zwischen 10^{o} und 80^{o}.

Das CCD-Element 14 sieht somit lediglich eine schmale Teilfläche aus dem textilen Flächengebilde 2, wobei das Sichtfeld wegen der schrägen Lage sowohl mehrere Maschenstäbchen 22 als auch mehrere Maschenreihen überdeckt bzw. im Sichtfeld mehrere Kettfäden 18 und mehrere Schußfäden 19 liegen.

Da im Falle einer rundgestrickten oder rundgewirkten Ware außerdem das textile Flächengebilde 2 eine Bewegung rechtwinklig zu der Richtung des Pfeiles 26 vollführt, sieht das CCD-Element 14 nacheinander die gesamte Oberfläche des erzeugten Warenschlauches. Die Maschenstäbchen 22 liegen im wesentlichen rechtwinklig zu der Hauptbewegungsrichtung der Ware beim Rundstricken.

Das von der Beleuchtungseinrichtung 3 ausgeleuchtete Feld hat auf der Oberseite des textilen Flächengebildes 2 etwa dieselbe Gestalt wie die Teilfläche 23, die jeweils von dem CCD-Element 14 gesehen wird. Vorzugsweise sind der beleuchtete Bereich und der aus dem CCD-Element 14 abgebildete Bereich deckungsgleich. Da dies nur mit sehr großem technischem Aufwand erzielt werden kann, ist der beleuchtete Bereich in allen Abmessungen etwas größer als der abgebildete Bereich 23.

Um einen möglichst guten Kontrast zu erhalten, fällt in dem ausgeleuchteten Bereich entsprechend dem dargestellten Rechteck 23 das Licht streifend ein, und zwar, wie Fig. 1 zeigt, unter einem Winkel zur Normalen auf die Fläche des texilen Flächengebildes 2 und außerdem schräg bezüglich der durch den Doppelpfeil 26 gezeigten Richtung der Maschenstäbchen 22 bzw. der Kettfäden 18. Würde zur Beleuchtung eine einzige Lichtquelle benutzt werden, so würde die Projektion der optischen Achse auf das textile Flächengebilde 2 rechtwinklig zu der langen Kante 24 verlaufen. Für die Anordnung der linearen Beleuchtungseinrichtung 3 bedeutet dies, daß ihre Zylinderlinse 8 projiziert auf die in Fig. 3 gezeigte Fläche des textilen Flächengebildes 2 einen zu der langen Kante 24 parallelen Verlauf zeigt. Dadurch entsteht eine Kontrastüberhöhung sowohl hinsichtlich der parallel zu der Richtung 26 liegenden Fadenteile als auch der rechtwinklig dazu ausgerichteten Fadenstücke des textilen Flächengebildes 2, womit sowohl Ringel als auch im Bereich von Laufmaschen flott liegende Fäden für das CCD-Element 14 sichtbar werden und von der Auswerteelektronik 5 erfaßt werden können.

Um den Kontrast durch das natürliche Tageslicht oder Raumlicht nicht zu beeinträchtigen, enthält der Strahlengang zwischen dem textilen Flächengebilde 2 und dem CCD-Element 14 ein Filter, das lediglich für das von den Infrarotleuchtdioden 7 ausgehende Licht durchlässig ist. Dieses Filter kann beispielsweise durch entsprechende Beschichtung des Spiegels 12 erzeugt werden.

## Patentansprüche

1. Vorrichtung zum Prüfen von textilen Flächengebilden (2), wie Maschenstäbchen (22) aufweisender Maschenware oder Kettfäden (18) enthaltenden Geweben auf Strukturfehler, wie Ringel, Laufmaschen, Löcher, Fadenfehler u.dgl.,
mit einer Beleuchtungseinrichtung (3), die gegenüber dem Flächengebilde (2) so angeordnet ist, daß ihre Hauptstrahlrichtung oder optische Achse (11) gegenüber einer Flächennormalen auf eine durch das textile Flächengebilde (2) definierten ausgeleuchteten Fläche geneigt ist und die Projektion der Hauptstrahlrichtung auf die Fläche unter einem Winkel gegenüber den Maschenstäbchen (22) bzw. den Kettfäden (18) verläuft, der größer ist als 10^{o} und kleiner ist als 80^{o},
mit einer Bildaufnahmeeinrichtung (4), die eine abbildende Optik (13) sowie ein lichtempfindliches Element (14) aufweist, auf dem mittels der abbildenden Optik (13) ein Bild aus dem beleuchteten Bereich erzeugt wird, wobei die Bildaufnahmeeinrichtung (4) auf derselben Seite der Fläche des textilen Flächengebildes (2) angeordnet ist wie die Beleuchtungseinrichtung (3) und
mit einer an das lichtempfindliche Element (14) angeschlossenen Auswerteelektronik (5).

2. Vorrichtung nach Anspruch 1, dadurch gekennzeichnet, daß die abbildende Optik (13) ein reelles, im wesentlichen scharfes Bild auf dem lichtempfindlichen Element (14) erzeugt.

3. Vorrichtung nach Anspruch 2, dadurch gekennzeichnet, daß die optische Achse (15) der abbildenden Optik (13) parallel zu der Normalen auf die Fläche verläuft.

4. Vorrichtung nach Anspruch 1, dadurch gekennzeichnet, daß in dem Strahlengang zwischen der Fläche und dem lichtempfindlichen Element (14) wenigstens ein Spiegel (12) enthalten ist.

5. Vorrichtung nach Anspruch 1, dadurch gekennzeichnet, daß das lichtempfindliche Element (14) ein CCD-Element ist.

6. Vorrichtung nach Anspruch 5, dadurch gekennzeichnet, daß das CCD-Element (14) längs einer Geraden angeordnete lichtempfindliche Punkte aufweist.

7. Vorrichtung nach Anspruch 5, dadurch gekennzeichnet, daß das CCD-Element (14) derart angeordnet ist, daß das auf dem CCD-Element (14) entstehende Bild das Abbild einer Teilfläche (23) des textilen Flächengebildes (2) ist, daß die Teilfläche (23) ein länglicher Fleck ist, dessen Ausdehnung (24) in der einen Richtung groß gegenüber der Ausdehnung (25) in der anderen Richtung ist und daß die Teilfläche (23) mit ihrer langen Ausdehnung (24) unter einem Winkel gegenüber der Richtung der Maschenstäbchen (22) bzw. der Kettfäden (18) verläuft, der größer als 10^{o} und kleiner als 80^{o} ist.

8. Vorrichtung nach Anspruch 1, dadurch gekennzeichnet, daß die Beleuchtungseinrichtung (3) eine lineare Lichtquelle enthält.

9. Vorrichtung nach Anspruch 8, dadurch gekennzeichnet, daß die lineare Lichtquelle von einer Anzahl längs einer Geraden angeordnete einzelner Lichtquellen (7) gebildet ist.

10. Vorrichtung nach Anspruch 1, dadurch gekennzeichnet, daß die Beleuchtungseinrichtung (3) eine Optik (8) enthält.

11. Vorrichtung nach Anspruch 10, dadurch gekennzeichnet, daß die Optik (8) eine Zylinderoptik ist.

12. Vorrichtung nach Anspruch 1, dadurch gekennzeichnet, daß die Beleuchtungseinrichtung (3) derart gestaltet ist, daß sie eine Teilfläche (23) beleuchtet, die rechteckförmig ist und deren Ausdehnung (24) in der einen Richtung groß zu der Ausdehnung (25) rechtwinklig dazu ist.

13. Vorrichtung nach einem oder mehreren der vorhergehenden Ansprüche, dadurch gekennzeichnet, daß die beleuchtete Teilfläche (23) und die abgebildete Teilfläche (23) ähnliche Gestalt aufweisen und daß die beleuchtete Teilfläche (23) nicht kleiner als die abgebildete Teilfläche (23) ist.

14. Vorrichtung nach Anspruch 8, dadurch gekennzeichnet, daß die Lichtquelle (7) eine Infrarotlichtquelle ist.

15. Vorrichtung nach Anspruch 1, dadurch gekennzeichnet, daß in dem Strahlengang der Bildaufnahmeeinrichtung ein Filter zum Unterdrücken von sichtbarem Licht enthalten ist.
